# EUROPÄISCHE PATENTSCHRIFT

(11) **EP 3 551 912 B1**
(45) Veröffentlichungstag und Bekanntmachung des Hinweises auf die Patenterteilung: **21.04.2021**
(21) Anmeldenummer: 17803769.3
(22) Anmeldetag: 09.11.2017
(51) Int. Cl.: F16J 9/06, F16J 9/20

(54) **ÖLABSTREIFKOLBENRING**
OIL SCRAPER RING FOR PISTON
SEGMENT RACLEUR POUR PISTON

(30) Priorität: 06.12.2016 DE 102016123548
(43) Veröffentlichungstag der Anmeldung: 16.10.2019
(73) Patentinhaber: Federal-Mogul Burscheid GmbH, 51399 Burscheid (DE)
(72) Erfinder: STUMPF, Walter, 45259 Essen (DE); MITTLER, Richard, 51399 Burscheid (DE); ESSER, Johannes, 51519 Odenthal (DE)
(74) Vertreter: Döpp, Ludger
(86) Internationale Anmeldenummer: PCT/DE2017/100950
(87) Internationale Veröffentlichungsnummer: WO 2018/103779

(56) Entgegenhaltungen:
- DE-A1-102009 036 240
- DE-C1- 10 018 322
- DE-T2- 60 302 321
- JP-A- 2002 071 021

## Beschreibung

Die Erfindung betrifft einen Ölabstreifkolbenring für eine Brennkraftmaschine.

Der DE 10 2009 009 744 A1 ist ein Kompressionskolbenring für eine Brennkraftmaschine zu entnehmen, beinhaltend eine, durch zwei Stege gebildete Lauffläche, obere und untere Flankenflächen sowie eine innere Umfangsfläche, wobei der untere Steg zumindest partiell parallel zu einer Gegenlauffläche verläuft und der obere Steg als Nasenminutenelement ausgebildet ist. Der untere Steg kann ballig ausgebildet sein.

Die DE 100 02 282 C1 offenbart ein Verfahren zur Herstellung eines Ölabstreifkolbenrings sowie einen Ölabstreifkolbenring. Der Ölabstreifkolbenring beinhaltet zwei Stege, die mit einem höckerartigen Profil versehen sind, aufweichen ein verschleißfester Überzug vorgesehen ist.

In der DE 10 2010 001 434 B4 wird ein Ölabstreifkolbenring beschrieben, umfassend einen Ringkörper sowie zwei radial äußere Laufstege auf dem Ringkörper, die in Bezug auf die Laufrichtung des Kolbens hintereinander angeordnet und durch eine äußere Vertiefung voneinander beabstandet sind, wobei jeder Laufsteg jeweils zwei Abstreiflippen aufweist und auf jeder Abstreiflippe eine Verschleißschutzbeschichtung vorgesehen ist.

Der DE 100 18 322 C1 ist ein Ölabstreifkolbenring mit zwei, bezogen auf die axiale Bauhöhe des Ringes, asymetrischen Stegen zu entnehmen, wobei der, dem Kompressionsraum zugewandte Steg, etwa auf mittlerer axialer Bauhöhe des Ringes, vorgesehen ist, und wobei im Ringrückenbereich, eine etwa in Ringmitte vorgesehene Feder, angeordnet ist.

Die DE 10 2009 036 240 A1 offenbart einen Kompressionsring, beinhaltend einen Laufflächenbereich, obere und untere Flanken sowie eine innere Umfangsfläche, wobei der Laufflächenbereich mit einer Profilierung versehen ist. Die Profilierung beinhaltet, über die axiale Höhe des Laufflächenbereichs gesehen, von einander beabstandete, etwa konvex ballig ausgebildete, jeweils einen Scheitelpunkt aufweisende Abschnitte, die zwischen sich eine Nut vorgebbarerTiefe einschließen, wobei der Kompressionskolbenring einen Flächenschwerpunkt aufweist, der in axialer Richtung in einer Ebene zwischen den Scheitelpunkten liegt.

Der Erfindung liegt die Aufgabe zugrunde, einen Ölabstreifkolbenring für eine Brennkraftmaschine bereitzustellen, der ein optimiertes Ölabstreifverhalten sowohl im Auf- als auch im Abwärtshub des Kolbens bewirkt.

Diese Aufgabe wird gelöst durch einen Ölabstreifkolbenring für eine Brennkraftmaschine mit zwei axial übereinander angeordneten Stegen im Bereich seiner Lauffläche, wobei beide Stege in Kontakt mit einer Gegenlauffläche die Lauffläche bilden und die Stege gegenlaufflächenseitig mit einem Profil versehen sind, das bedarfsweise eine zumindest partielle Beschichtung aufweist, wobei beide Stege dergestalt mit unterschiedlichen Steggeometrien versehen sind, dass der untere Steg den überwiegenden Anteil der Abstreifwirkung im Abwärtshub übernimmt und der obere Steg beim Aufwärtshub im Wesentlichen auf einem Restölfilm auf der Gegenlauffläche aufschwimmt, wobei der obere Steg, ausgehend von seiner oberen Flanke, konisch in Richtung der Gegenlauffläche und anschließend über einen Teilbereich der Steghöhe etwa parallel zur Gegenlauffläche verläuft und anschließend zumindest über einen Teilbereich der Steghöhe mit einem asymmetrisch balligen Laufflächenprofil versehen ist.

Vorteilhafte Weiterbildungen des Erfindungsgegenstandes sind den Unteransprüchen zu entnehmen.

Infolge der vorgeschlagenen Geometrie der beiden Laufflächenstege dient der untere Steg einem maximalen Ölabstreifverhalten nach unten, während der obere Steg für ein geringes Ölschieben nach oben ausgebildet ist.

Der untere Steg ist vorteilhafterweise mit einem höckerartigen Profil versehen, das gegenlaufflächenseitig, vorteilhafterweise im unteren Bereich des unteren Steges, angeordnet ist.

Vorteilhafterweise ist der gesamte, die Lauffläche bildende Steg laufflächenseitig mit einer verschleißfesten Beschichtung versehen, die beispielsweise durch eine PVD- oder CVD-Schicht gebildet sein kann. Alternative Schichten auf Basis von Chrom oder dergleichen sind hier ebenfalls denkbar.

Erfindungsgemäß verläuft der obere Steg, ausgehend von seiner oberen Flanke, konisch in Richtung der Gegenlauffläche und verläuft anschließend über einen Teilbereich der Steghöhe etwa parallel zur Gegenlauffläche und ist anschließend zumindest über einen Teilbereich der Steghöhe des oberen Steges mit einem asymmetrisch balligen Laufflächenprofil versehen. Auch hier kann es sinnvoll sein, diejenigen, die Lauffläche bildenden Steganteile zumindest laufflächenseitig mit einer verschleißfesten Beschichtung zu versehen, die bedarfsweise ebenfalls als PVD- oder CVD-Schicht ausgebildet sein kann.

Es ist ebenfalls denkbar, alternative Beschichtungen auf Basis von Chrom oder dergleichen vorzusehen.

Von Vorteil ist, wenn die verschleißfeste Beschichtung des oberen Stegs gerundet ausgebildet wird, dergestalt, dass ein nach oben offener Spalt entsteht. Durch diese Maßgabe wird das Aufschwimmen des oberen Steges auf dem Restölfilm der Gegenlauffläche gefördert.

Der Erfindungsgegenstand ist anhand eines Ausführungsbeispiels in der Zeichnung dargestellt und wird wie folgt beschrieben. Es zeigen:
- Figur 1: Prinzipskizze eines Ölabstreifkolbenrings;
- Figur 2: Teildarstellung der Stege des Kolbenrings gemäß Figur 1 in vergrößerter Ansicht, wobei die Geometrie des oberen Stegs nicht erfindungsgemäß ausgeführt ist.

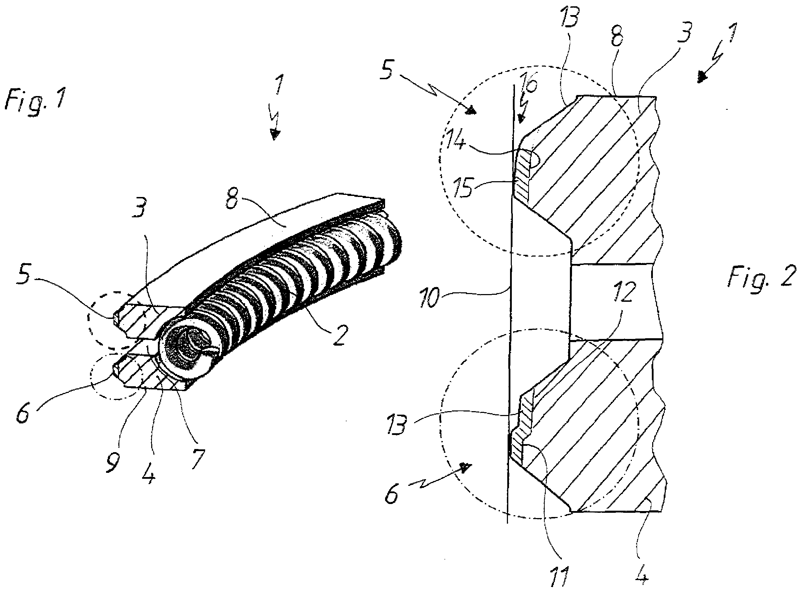

Figur 1 zeigt einen Ölabstreifkolbenring 1, der in Wirkverbindung mit einem Federelement 2 steht. Der Ölabstreifkolbenring 1 beinhaltet zwei Stege 3,4, die im Bereich einer nicht dargestellten Gegenlauffläche Laufflächen 5,6 bilden. Zwischen den Stegen 3,4 befinden sich Ölablaufbohrungen 7. Der Ölabstreifkolbenring 1 weist obere 8 und untere Flanken 9.

Figur 2 zeigt in vergrößerter Darstellung die Stege 3,4 sowie die Laufflächen 5,6 des Ölabstreifkolbenrings 1 gemäß Figur 1. Die beiden Stege 3,4 sind mit unterschiedlichen Steggeometrien oben und unten ausgeführt, wobei der Steg 3 den oberen Steg und der Steg 4 den unteren Steg bildet. In Figur 2 ist auch die Gegenlauffläche 10 angedeutet, die beispielsweise durch eine Zylinderwand gebildet sein kann. Im Bereich des unteren Steges 4 ist ein höckerartiges Profil 11 vorgesehen, während der verbleibende Stegbereich 12 etwa parallel zur Gegenlauffläche 10 verläuft. Auf der gesamten Lauffläche 6 des Steges 4 ist in diesem Beispiel eine verschleißfeste Schicht in Form einer PVD-Schicht 13 aufgebracht, die laufflächenseitig der geometrischen Kontur des Steges 4 folgt.

Der obere Steg 3 ist gegenlaufflächenseitig - ausgehend von seiner oberen Flanke 8 - zunächst mit einem konisch sich in Richtung der Gegenlauffläche 10 verjüngenden Abschnitt 13 - versehen, der in einen etwa parallel zur Gegenlauffläche 10 verlaufenden Bereich 14 übergeht. Erfindungsgemäß ist der obere Steg anschließend zumindest über einen Teilbereich der Steghöhe mit einem asymmetrisch balligen Laufflächenprofil versehen. In Analogie zum Steg 4 ist auch der Steg 3 im Bereich seiner Lauffläche 5 mit einer verschleißfesten Beschichtung, beispielsweise einer PVD-Schicht 15, versehen, die dergestalt bearbeitet ist, dass sie unter Bildung eines Spaltes 16 in gerundeter Form vorgesehen ist.

Infolge der unterschiedlichen geometrischen Stegausführungen bewirkt der untere Steg 4 ein maximales Ölabstreifverhalten nach unten, während der obere Steg 3 für ein geringstmögliches Ölschieben nach oben vorgesehen ist.

## Patentansprüche

1. Ölabstreifkolbenring für eine Brennkraftmaschine mit zwei axial übereinander angeordneten Stegen (3,4) im Bereich seiner Lauffläche (5,6), wobei beide Stege (3,4) in Kontakt mit einer Gegenlauffläche (10) die Lauffläche (5,6) bilden und die Stege (3,4) gegenlaufflächenseitig mit einem Profil (11,13,14) versehen sind, das bedarfsweise eine zumindest partielle Beschichtung (13,15) aufweist, wobei beide Stege (3,4) dergestalt mit unterschiedlichen Steggeometrien versehen sind, dass der untere Steg (4) den überwiegenden Anteil der Abstreifwirkung im Abwärtshub übernimmt und der obere Steg (3) beim Aufwärtshub im Wesentlichen auf einem Restölfilm auf der Gegenlauffläche (10) aufschwimmt, **dadurch gekennzeichnet, dass** der obere Steg (3), ausgehend von seiner oberen Flanke (8), konisch in Richtung der Gegenlauffläche (10) und anschließend über einen Teilbereich der Steghöhe etwa parallel zur Gegenlauffläche (10) verläuft und anschließend zumindest über einen Teilbereich der Steghöhe mit einem asymmetrisch balligen Laufflächenprofil versehen ist.

2. Ölabstreifkolbenring nach Anspruch 1, **dadurch gekennzeichnet, dass** der untere Steg (4) mit einem höckerartigen Profil (11) versehen ist.

3. Ölabstreifkolbenring nach Anspruch 2, **dadurch gekennzeichnet, dass** das höckerartige Profil (11) gegenlaufflächenseitig im unteren Bereich des unteren Steges (4) vorgesehen ist.

4. Ölabstreifkolbenring nach einem der Ansprüche 1 bis 3, **dadurch gekennzeichnet, dass** der gesamte, die Lauffläche (6) bildende untere Steg (4) laufflächenseitig mit einer verschleißfesten Beschichtung (13) versehen ist.

5. Ölabstreifkolbenring nach Anspruch 4, **dadurch gekennzeichnet, dass** die Beschichtung (13) durch eine PVD- oder CVD-Schicht gebildet ist.

6. Ölabstreifkolbenring nach einem der Ansprüche 1 bis 5, **dadurch gekennzeichnet, dass** der gesamte die Lauffläche (5) bildende obere Steg (3) laufflächenseitig mit einer verschleißfesten Beschichtung (15) versehen ist.

7. Ölabstreifkolbenring nach Anspruch 6, **dadurch gekennzeichnet, dass** die Beschichtung (15) durch eine PVD- oder CVD-Schicht gebildet ist.

8. Ölabstreifkolbenring nach einem der Ansprüche 1 bis 7, **dadurch gekennzeichnet, dass** die verschleißfeste Beschichtung (15) dergestalt gerundet ausgebildet ist, dass ein nach oben offener Spalt (16) entsteht.

## Claims

1. An oil scraper piston ring for an internal combustion engine, comprising two webs (3, 4) which are axially placed one above the other in the area of its bearing surface (5, 6), wherein both webs (3, 4) are in contact with a counter-bearing surface (10) and thus form the bearing surface (5, 6) and the webs (3, 4) are provided with a profile (11, 13, 14) on the side of the counter-bearing surface, which profile comprises, in case of need, an at least partial coating (13, 15), wherein both webs (3, 4) are provided with different web geometries such that the lower web (4) assumes the main part of the scraping effect during the upwards stroke and the upper web (3) essentially swims up on a residual oil film on the counter-bearing surface (10) during the upwards stroke, **characterized in that** the upper web (3) extends approximately parallel to the counter-bearing surface (10) starting from its upper flank (8), conically into the direction of the counter-bearing surface (10) and afterwards over a partial area of the web height, and it is subsequently provided with an asymmetrically crowned bearing surface profile at least over a partial area of the web height.

2. An oil scraper piston ring according to claim 1, **characterized in that** the lower web (49 is provided with a cusp-like profile (11).

3. An oil scraper piston ring according to claim 2, **characterized in that** the cusp-like profile (11) is provided in the lower portion of the lower web (4) on the side of the counter-bearing surface.

4. An oil scraper piston ring according to one of the claims 1 through 3, **characterized in that** the entire lower web (4) that forms the bearing surface (6) is provided with a wear-resistant coating (13) on the side of the bearing surface.

5. An oil scraper piston ring according to claim 4, **characterized in that** the coating (13) is formed by a PVD or CVD layer.

6. An oil scraper piston ring according to one of the claims 1 through 5, **characterized in that** the entire upper web (3) that forms the bearing surface (5) is provided with a wear-resistant coating (15) on the side of the bearing surface.

7. An oil scraper piston ring according to claim 6, **characterized in that** the coating (15) is formed by a PVD or CVD layer.

8. An oil scraper piston ring according to one of the claims 1 through 7, **characterized in that** the wear-resistant coating (15) is configured as to be rounded, such that a gap (16), which is open upwards, is formed.

## Revendications

1. Segment de piston racleur d'huile pour un moteur à combustion interne, comprenant deux entretoises (3, 4), qui sont axialement disposées l'une au-dessus de l'autre, dans la zone de sa surface de roulement (5, 6) dans lequel les deux entretoises (3, 4) sont en contact avec une contre-surface de roulement (10) et forment ainsi la surface de roulement (5, 6) et les entretoises sont munies d'un profile (11, 13, 14) du côté de la contre-surface de roulement, lequel profile comprend, si nécessaire, un revêtement au moins partiel (13, 15), dans lequel les deux entretoises (3, 4) sont munies de géométries d'entretoise différentes, de sorte que l'entretoise inférieure (4) est responsable pour la plus grande partie de l'effet de raclage pendant la course ascendante et l'entretoise supérieure (3) nage essentiellement sur un film d'huile résiduelle sur la contre-surface de roulement (10) pendant la course ascendante, **caractérisé en ce que** l'entretoise supérieure (3) s'étend approximativement de manière parallèle à la contre-surface de roulement (10) à partir de son flanc supérieur (8), de manière conique dans la direction de la contre-surface de roulement (10) et ensuite sur une zone partielle de la hauteur d'entretoise, et elle est ensuite munie d'un profile de surface de roulement de forme asymétriquement bombée sur une zone partielle de la hauteur d'entretoise.

2. Segment de piston racleur d'huile selon la revendication 1, **caractérisé en ce que** l'entretoise inférieure (4) est munie d'un profile en forme de bosses (11).

3. Segment de piston racleur d'huile selon la revendication 2, **caractérisé en ce que** le profile en forme de bosses (11) est prévu du côté de la contre-surface de roulement dans la partie inférieure de l'entretoise inférieure (4).

4. Segment de piston racleur d'huile selon l'une des revendications 1 à 3, **caractérisé en ce que** l'entretoise inférieure entière (4), qui forme la surface de roulement (6), est munie d'un revêtement résistant à l'usure (13) du côté de la surface de roulement.

5. Segment de piston racleur d'huile selon la revendication 4, **caractérisé en ce que** le revêtement (13) est formé par une couche PVD ou CVD.

6. Segment de piston racleur d'huile selon l'une des revendications 1 à 5, **caractérisé en ce que** l'entretoise supérieure entière (3), qui forme la surface de roulement (5), est munie d'un revêtement résistant à l'usure (15) du côté de la surface de roulement.

7. Segment de piston racleur d'huile selon la revendication 6, **caractérisé en ce que** le revêtement (15) est formé par une couche PVD ou CVD.

8. Segment de piston racleur d'huile selon l'une des revendications 1 à 7, **caractérisé en ce que** le revêtement résistant à l'usure (15) est configuré de manière arrondie, de sorte qu'une fente (16) ouverte vers le haut est générée.
